# EUROPEAN PATENT APPLICATION

(11) **EP 4 329 241 A1**
(43) Date of publication of application: **28.02.2024**
(21) Application number: 22815901.8
(22) Date of filing: 23.05.2022
(51) Int. Cl.: H04L 9/08, G06F 21/32, G06F 21/60, G06F 21/64, G09C 1/00, H04L 9/32

(54) **DATA MANAGEMENT SYSTEM, DATA MANAGEMENT METHOD, AND NON-TRANSITORY RECORDING MEDIUM**

(30) Priority: 31.05.2021 JP 2021090942
(71) Applicant: Hitachi, Ltd., Tokyo 100-8280 (JP)
(72) Inventor: TAKAHASHI Kenta, Tokyo 100-8280 (JP); MOTOMIYA Yukie, Tokyo 100-8280 (JP); NAGANUMA Ken, Tokyo 100-8280 (JP); HABUCHI Takayuki, Tokyo 100-8280 (JP); KAWANA Non, Tokyo 100-8280 (JP)
(74) Representative: Manitz Finsterwald Patent- und Rechtsanwaltspartnerschaft mbB
(86) International application number: PCT/JP2022/021146
(87) International publication number: WO 2022/255151

(57) **Abstract**

A first computer generates a secret key based on biometric information on a user of the first computer. A second computer holds a public key corresponding to the secret key, encrypted data as data encrypted based on the public key, a list of indexes indicating a type of the data, and an index of the encrypted data, and transmits the list to the first computer. The first computer designates an index of data to be presented, which is an index included in the list, and transmits the designated index to the second computer. The second computer transmits, to the first computer, the encrypted data corresponding to the index transmitted by the first computer. The first computer decrypts the encrypted data corresponding to the index based on the secret key and transmits the decrypted data to the third computer.

## Description

### Cross-Reference to Related Application

The present application claims the priority of Japanese Patent Application No. 2021-90942, filed on May 31, 2021, the entire contents of which are incorporated herein by reference.

### Technical Field

The present invention relates to a data management system, a data management method, and a non-transitory recording medium.

### Background Art

A self-sovereign identity (SSI) technique using a blockchain and a smartphone is known. In this technique, an individual or an organization serving as an issuer of a verifiable credential (VC) creates a self-identifier (DID) and a pair including a public key and a secret key, writes the DID and the public key in a blockchain, and stores the secret key in a device such as a smartphone to manage the secret key. An issuer of a verifiable credential issues a verifiable credential to an individual. Specifically, the individual applies to the issuer for a VC, and receives the verifiable credential. Then, the individual holds a personal qualification certificate in a device owned by the individual such as a smartphone. In this technique, the individual presents the qualification certificate to a verifier using the device owned by the individual. NPL 1 describes a data format of a verifiable credential for implementing the technique described above.

### Citation List

### Non Patent Literature

NPL 1: Manu Sporny, Dave Longley, David Chadwick, "Verifiable Credentials Data Model 1.0," "World Wide Web Consortium, November 2019, [searched on May 20, 2021], Internet <https://www.w3.org/TR/vc-data-model>

### Summary of Invention

### Technical Problem

In the related art described above, when the individual loses the device owned by the individual such as the smartphone, both data such as the verifiable credential and a secret key are lost, and the data cannot be certified. On the other hand, when data such as the verifiable credential or the secret key is backed up in a storage such as a cloud, risks occur including a risk of misuse or privacy infringement by a storage administrator, and a risk that the data such as the verifiable credential or the secret key is to be leaked to an attacker and used for spoofing.

A person who does not own a device such as a smartphone cannot use the technique described above in the first place. Further, when the smartphone of the individual is stolen for misuse, there is a risk that data such as the verifiable credential is presented without permission and the data is spoofed. Therefore, according to an aspect of the invention, data is safely managed without using an individual device.

### Solution to Problem

In order to solve the above problems, one aspect of the invention adopts the following configuration. A data management system includes a first computer, a second computer, and a third computer. The first computer generates a secret key based on biometric information on a user of the first computer. The second computer holds a public key corresponding to the secret key, encrypted data as data encrypted based on the public key, a list of indexes indicating a type of the data, and an index of the encrypted data, and transmits the list to the first computer. The first computer designates an index of data to be presented, which is an index included in the list, and transmits the designated index to the second computer. The second computer transmits, to the first computer, the encrypted data corresponding to the index transmitted by the first computer. The first computer decrypts the encrypted data corresponding to the index based on the secret key and transmits the decrypted data to the third computer.

### Advantageous Effects of Invention

According to an aspect of the invention, data can be safely managed without using an individual device.

Problems, configurations, and effects other than those described above will be clarified in description of the following embodiment.

### Brief Description of Drawings

[FIG. 1] FIG. 1 is a block diagram illustrating a configuration example of a data management system according to a first embodiment.
[FIG. 2] FIG. 2 is a sequence diagram illustrating an example of registration processing according to the first embodiment.
[FIG. 3A] FIG. 3A is a sequence diagram illustrating an example of data issuing processing according to the first embodiment.
[FIG. 3B] FIG. 3B is a sequence diagram illustrating the example of the data issuing processing according to the first embodiment.
[FIG. 4A] FIG. 4A is a sequence diagram illustrating an example of data presentation processing according to the first embodiment.
[FIG. 4B] FIG. 4B is a sequence diagram illustrating the example of the data presentation processing according to the first embodiment.
[FIG. 5A] FIG. 5A is a diagram illustrating an example of screen transition of an output device of a registration terminal in the registration processing according to the first embodiment.
[FIG. 5B] FIG. 5B is a diagram illustrating the example of the screen transition of the output device of the registration terminal in the registration processing according to the first embodiment.
[FIG. 6A] FIG. 6A is a diagram illustrating an example of screen transition of the output device of the registration terminal in the data issuing processing according to the first embodiment.
[FIG. 6B] FIG. 6B is a diagram illustrating an example of the screen transition of the output device of the registration terminal in the data issuing processing according to the first embodiment.
[FIG. 7A] FIG. 7A is a diagram illustrating an example of screen transition of an output device of the registration terminal in the data presentation processing according to the first embodiment.
[FIG. 7B] FIG. 7B is a diagram illustrating an example of the screen transition of the output device of the registration terminal in the data presentation processing according to the first embodiment.

### Description of Embodiments

Hereinafter, an embodiment of the invention will be described in detail with reference to the drawings. In the present embodiment, the same components are denoted by the same reference numerals in principle, and repeated description thereof is omitted. It should be noted that the present embodiment is merely an example for implementing the invention and does not limit the technical scope of the invention.

### First Embodiment

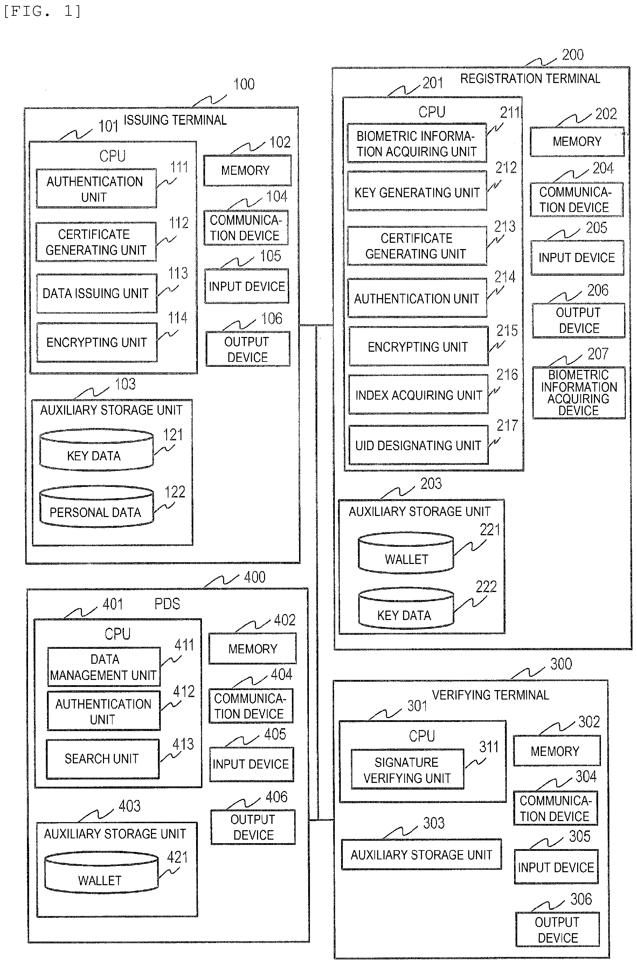

FIG. 1 is a block diagram illustrating a configuration example of a data management system. The data management system includes, for example, an issuing terminal 100, a registration terminal 200, a verifying terminal 300, and a personal data store (PDS) 400 that are connected via a network such as the Internet. The issuing terminal 100 is implemented by, for example, a computer including a central processing unit (CPU) 101, a memory 102, an auxiliary storage unit 103, a communication device 104, an input device 105, and an output device 106.

The CPU 101 includes a processor and executes a program stored in the memory 102. The memory 102 includes a read only memory (ROM) serving as a non-volatile storage element and a random access memory (RAM) serving as a volatile storage element. The ROM stores an invariable program (for example, a basic input and output system (BIOS)) and the like. The RAM is a high-speed volatile storage element such as a dynamic random access memory (DRAM), and temporarily stores a program executed by the CPU 101 and data used when the program is executed.

The auxiliary storage unit 103 is a large-capacity and non-volatile storage device such as a magnetic storage device (hard disk drive (HDD)) and a flash memory (solid state drive (SSD)), and stores a program executed by the CPU 101 and data used when the program is executed. That is, the program is read from the auxiliary storage unit 103, loaded into the memory 102, and executed by the CPU 101.

The input device 105 is a device that receives input from an operator, such as a keyboard or a mouse. The output device 106 is a device such as a display device or a printer that outputs an execution result of a program in a format that can be visually recognized by the operator.

The communication device 104 is a network interface device that controls communication with other devices according to a predetermined protocol. The communication device 104 includes, for example, a serial interface such as a universal serial bus (USB).

A part or all of programs executed by the CPU 101 may be provided to the issuing terminal 100 from a removable medium (CD-ROM, flash memory, or the like) serving as a non-transitory storage medium or an external computer including a non-transitory storage device via the network, and may be stored in the non-volatile auxiliary storage unit 103 serving as the non-transitory storage medium. Therefore, the issuing terminal 100 may have an interface that reads data from the removable medium. The same applies to the registration terminal 200, the verifying terminal 300, and the PDS 400.

The issuing terminal 100 is a computer system configured on one physical computer or a plurality of logical or physical computers, and may operate on the same computer with separate threads or on a virtual computer constructed on a plurality of physical computer resources. The same applies to the registration terminal 200, the verifying terminal 300, and the PDS 400.

The CPU 101 includes, for example, an authentication unit 111, a certificate generating unit 112, a data issuing unit 113, and an encrypting unit 114. The authentication unit 111 performs authentication with the registration terminal 200. The certificate generating unit 112 generates a verifiable credential. Wherein, the verifiable credential may be data obtained by adding an electronic signature, which is generated based on key data 121, to data obtained by adding predetermined information to data included in personal data 122. In addition, the verifiable credential may be a second public key certificate, that is, data obtained by adding an electronic signature, which is generated based on the key data 121, to data including all or a part of UIDs (IDs for identifying users of the registration terminal 200) and a first public key certificate that are received from the registration terminal 200, and an identity proofing method when identity proof of a user is performed by an issuer or the issuing terminal 100.

The data issuing unit 113 issues data included in the personal data 122 to the registration terminal 200 or the PDS 400. The encrypting unit 114 encrypts the personal data.

For example, the CPU 101 functions as the authentication unit 111 by operating according to an authentication program loaded into the memory 102, and functions as the certificate generating unit 112 by operating according to a certificate generating program loaded into the memory 102. For other functional units provided in the CPU 101, relationships between programs and functional units are the same. The functional units to be described later, which are provided in a CPU 201 of the registration terminal 200, a CPU 301 of the verifying terminal 300, and a CPU 401 of the PDS 400, respectively, have the same relationship between the programs and the functional units.

A part or all of the functions, which are performed by the functional units provided in the CPU 101, the CPU 201 of the registration terminal 200, the CPU 301 of the verifying terminal 300, and the CPU 401 of the PDS 400, may be implemented by hardware such as an application specific integrated circuit (ASIC) or a field-programmable gate array (FPGA) .

The auxiliary storage unit 103 holds, for example, the key data 121 and the personal data 122. The key data 121 includes keys of the issuing terminal 100 or a public key of the registration terminal 200. The personal data 122 includes personal data of a user of the registration terminal 200.

A part or all of information stored in the auxiliary storage unit 103, an auxiliary storage unit 203 of the registration terminal 200, an auxiliary storage unit 303 of the verifying terminal 300, and an auxiliary storage unit 403 of the PDS 400 may be stored in the memory 102, a memory 202, a memory 302, and a memory 402, respectively, or may be stored in a database connected to the auxiliary storage unit.

In the present embodiment, information used by the data management system may be expressed by any data structure without depending on the data structure. Although information is expressed in a table format in the present embodiment, for example, a data structure appropriately selected from a list, a database, or a queue can store the information.

The registration terminal 200 is implemented by, for example, a computer including the CPU 201, the memory 202, the auxiliary storage unit 203, a communication device 204, an input device 205, an output device 206, and a biometric information acquiring device 207.

Since description of hardware for the CPU 201, the memory 202, the auxiliary storage unit 203, the communication device 204, the input device 205, and the output device 206 is the same as description of hardware for the CPU 101, the memory 102, the auxiliary storage unit 103, the communication device 104, the input device 105, and the output device 106, description thereof is omitted.

The CPU 201 includes, for example, a biometric information acquiring unit 211, a key generating unit 212, a certificate generating unit 213, an authentication unit 214, an encrypting unit 215, an index acquiring unit 216, and a UID designating unit 217. The biometric information acquiring unit 211 acquires biometric information on the user of the registration terminal 200 via the biometric information acquiring device 207. The key generating unit 212 generates a public key, a secret key, and a symmetric key.

The certificate generating unit 213 generates a public key certificate. The authentication unit 214 performs authentication with the issuing terminal 100 and authentication with the PDS 400. The encrypting unit 215 encrypts data to be transmitted to the verifying terminal 300. The index acquiring unit 216 acquires a data index that specifies a type of data. The UID designating unit 217 designates a UID that is an ID for identifying a user of the registration terminal 200.

The auxiliary storage unit 203 holds, for example, one or more wallets 221 and key data 222. Each of the wallets 221 is associated with the UID of the user of the registration terminal 200, and holds data issued by the issuing terminal 100 to the user. That is, the wallet 221 is a data storage region on the auxiliary storage unit 403, which is determined for each user and is managed by the user to store data including data (for example, personal data of the user, a verifiable credential, and a public key certificate) issued to the registration terminal 200 by the issuing terminal 100. The key data 222 holds a key or auxiliary data on the user of the registration terminal 200.

The biometric information acquiring device 207 acquires biometric information of a user. Examples of the biometric information acquiring device 207 include a camera that captures a face image of the user, a scanner that acquires fingerprints or veins of the user, or the like.

The verifying terminal 300 is implemented by, for example, a computer including the CPU 301, the memory 302, the auxiliary storage unit 303, a communication device 304, an input device 305, and an output device 306. Since description of hardware for the CPU 301, the memory 302, the auxiliary storage unit 303, the communication device 304, the input device 305, and the output device 306 is the same as the description of hardware for the CPU 101, the memory 102, the auxiliary storage unit 103, the communication device 104, the input device 105, and the output device 106, description thereof is omitted. The CPU 301 includes, for example, a signature verifying unit 311. The signature verifying unit 311 verifies a signature attached to data received from the registration terminal 200.

The PDS 400 is implemented by, for example, a computer including the CPU 401, the memory 402, the auxiliary storage unit 403, a communication device 404, an input device 405, and an output device 406. Since description of hardware for the CPU 401, the memory 402, the auxiliary storage unit 403, the communication device 404, the input device 405, and the output device 406 is the same as the description of hardware for the CPU 101, the memory 102, the auxiliary storage unit 103, the communication device 104, the input device 105, and the output device 106, description thereof is omitted.

The CPU 401 includes, for example, a data management unit 411, an authentication unit 412, and a search unit 413. The data management unit 411 generates a wallet 421 corresponding to the designated UID, and manages data to be stored in the generated wallet 421. The authentication unit 412 performs authentication with the registration terminal 200. The search unit 413 searches for the wallet 421 corresponding to the UID. For example, the auxiliary storage unit 403 holds the wallet 421 for each of one or more UIDs. The wallet 421 holds data issued by the issuing terminal 100 to the user associated with the UID.

For example, a part of devices included in the data management system may be integrated. For example, the issuing terminal 100 and the registration terminal 200 may be integrated, or the registration terminal 200 and the PDS 400 may be integrated. Authentication processing to be described later may be omitted between such an integrated device.

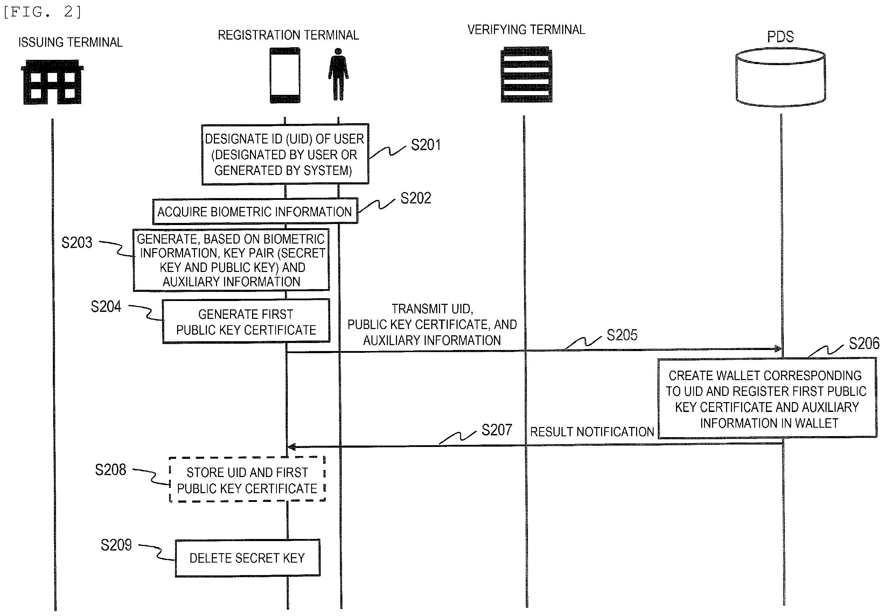

FIG. 2 is a sequence diagram illustrating an example of registration processing. The UID designating unit 217 of the registration terminal 200 designates a UID that is an ID for identifying the user of the registration terminal 200 (S201). The UID designating unit 217 may store the designated UID in the auxiliary storage unit 203 and/or the memory 202.

Specifically, for example, the UID designating unit 217 receives input of a UID from the user of the registration terminal 200, and designates the input UID. For example, the UID designating unit 217 may automatically designate a UID, or the registration terminal 200 may hold a UID corresponding to the user, and the UID designating unit 217 may acquire the UID to designate the UID.

The biometric information acquiring unit 211 acquires biometric information (for example, fingerveins, fingerprints, a face image, or a gait) on the user of the registration terminal 200 via the biometric information acquiring device 207 (S202). The key generating unit 212 generates, based on the biometric information, a key pair including the secret key and the public key and auxiliary data as necessary (S203). Specifically, for example, the key generating unit 212 generates the key pair based on the biometric information according to an algorithm such as Fuzzy Extractor or Fuzzy Signature. When an algorithm such as Fuzzy Extractor is used, the auxiliary data is used in key generation processing based on the biometric information at a time of data issuance or data presentation to be described later.

The certificate generating unit 213 acquires the first public key certificate (S204). Specifically, for example, the certificate generating unit 213 may acquire the first public key certificate by generating a self-certificate based on the secret key generated in step S203, or may acquire the first public key certificate from a certificate authority connected to the registration terminal 200.

The certificate generating unit 213 transmits the UID, the first public key certificate, and the generated auxiliary data to the PDS 400 (S205). The data management unit 411 of the PDS 400 creates the wallet 421 corresponding to the UID, and registers the first public key certificate and the auxiliary data in the wallet 421 (S206). The data management unit 411 transmits, to the registration terminal 200, the UID and a registration result of the first public key certificate in the wallet 421 (S207).

The certificate generating unit 213 stores the UID and the first public key certificate in the wallet 221 (S208). The processing in step S208 may be omitted. However, when the common registration terminal 200 is used in the data issuing processing, the data issuing processing, and the data presentation processing by performing the processing in step S208, processing in which the registration terminal 200 requests the public key certificate from the PDS 400 can be omitted, the number of times of communication between the registration terminal 200 and the PDS 400 can be reduced, and processing performance can be improved. The key generating unit 212 deletes the secret key (S209) and ends the registration processing.

In addition to or instead of the first public key certificate, the certificate generating unit 213 may acquire the second public key certificate issued as a verifiable credential by the issuing terminal 100, and transmit the second public key certificate to the PDS 400. In this case, the PDS 400 registers the first public key certificate and/or the second public key certificate in the wallet 421 corresponding to the UID. The second public key certificate is, for example, a certificate in an X509 format or the like, in which description of UID is included in a subject or a subject identifier (Subject Unique ID), the public key is described in a subject public key (Subject Public Key Info), and an identifier of a data issuer is described in an issuer. Further, description of the identity proofing method (for example, a data issuer faces a user to confirm an insurance card) is included in extended regions (extensions).

An example in which the secret key, the public key, and the symmetric key are generated based on the biometric information is described in the present embodiment. Alternatively, the secret key, the public key, and the symmetric key may be generated based on information that can be presented to an individual in an empty-handed manner, for example, stored information of the individual, such as a password, in addition to information including individuality, such as the biometric information.

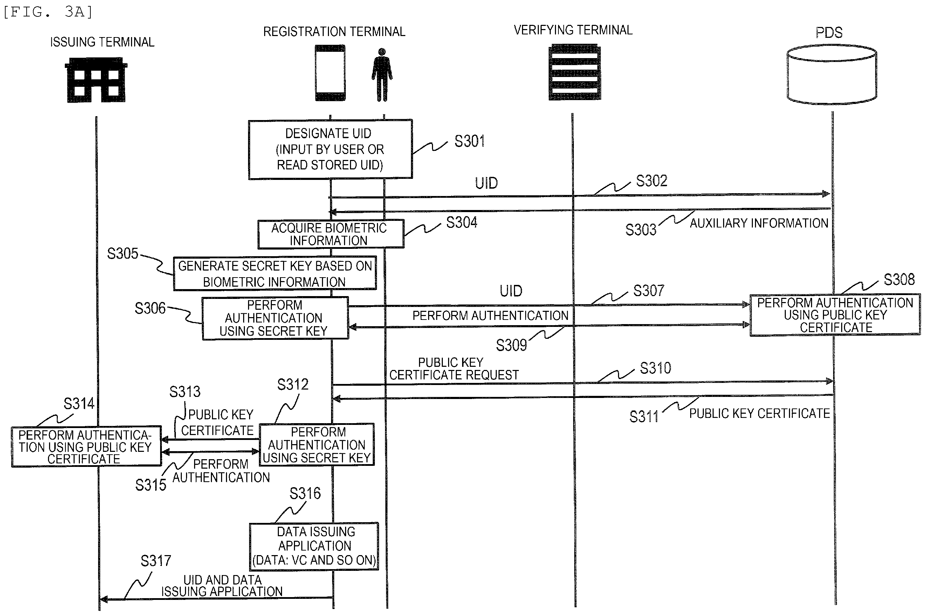

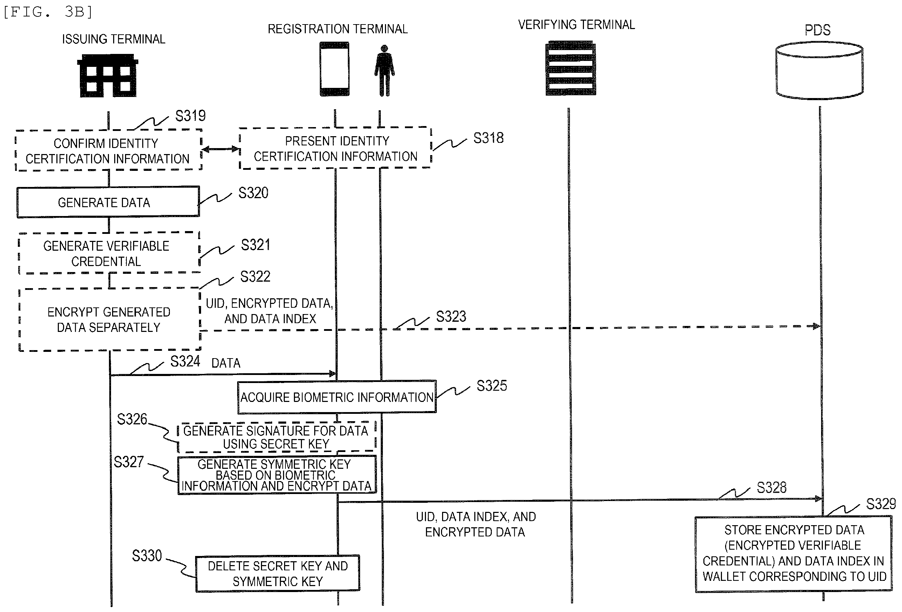

FIGS. 3A and 3B are sequence diagrams illustrating an example of data issuing processing. In FIGS. 3A and 3B, processing performed by the registration terminal 200 is described. Alternatively, processing to be described below may be performed by a terminal different from the registration terminal 200 used in the data registration processing. That is, the registration terminals 200 used in the data registration processing and the data issuing processing may be the same terminal or different terminals.

The UID designating unit 217 of the registration terminal 200 acquires the UID according to, for example, the input from the user of the registration terminal 200 (S301). When the UID designated by the UID designating unit 217 in step S201 is stored in the memory 102 or the auxiliary storage unit 103, the processing in step S301 may be omitted.

When the auxiliary data is generated in step S203, the UID designating unit 217 transmits the UID to the PDS 400 (S302), and the search unit 413 of the PDS 400 acquires the auxiliary data stored in the wallet 421 corresponding to the UID and sends the auxiliary data back to the registration terminal 200 (S303).

The biometric information acquiring unit 211 acquires biometric information (for example, biometric information of the same type as that during the registration processing, such as fingerveins, fingerprints, or a face image) on the user of the registration terminal 200 via the biometric information acquiring device 207 (S304). The key generating unit 212 generates a secret key based on the biometric information using, for example, auxiliary data (S305).

The UID designating unit 217 transmits the UID to the PDS 400 (S307), and performs authentication between the registration terminal 200 and the PDS 400 (S309). Specifically, the authentication unit 214 of the registration terminal 200 uses the secret key (S306), and the authentication unit 412 of the PDS 400 uses the first public key certificate or the second public key certificate (hereinafter, simply referred to as a public key certificate when either the first public key certificate or the second public key certificate is used) (S307), thereby performing the authentication between the registration terminal 200 and the PDS 400.

The processing in steps S302 to S309 may be omitted. However, by performing the processing in steps S302 to S309, it is possible to ensure safety against a false UID or an input error from the registration terminal 200 to the PDS 400. Instead of the processing in steps S302 to S309, authentication (for example, password authentication, or first identity online (FIDO) authentication) may be performed by another authentication method.

When the authentication between the registration terminal 200 and the PDS 400 is successfully performed, the process proceeds to the following processing, and when the authentication fails, the process ends. The authentication unit 214 of the registration terminal 200 transmits a public key certificate request including the UID (however, the UID may not be included when the processing in step S305 is performed) to the PDS 400 (S310). The search unit 413 of the PDS 400 searches for the wallet 421 corresponding to the UID, and transmits the public key certificate stored in the wallet 421 to the registration terminal 200 (S311).

The authentication unit 214 transmits the acquired public key certificate to the issuing terminal 100 (S313), and performs authentication between the registration terminal 200 and the issuing terminal 100 (S315). Specifically, the authentication unit 214 of the registration terminal 200 uses the secret key (S312), and the authentication unit 111 of the issuing terminal 100 uses the received public key certificate (S314), thereby performing the authentication between the registration terminal 200 and the issuing terminal 100.

When the authentication between the registration terminal 200 and the issuing terminal 100 is successfully performed, the process proceeds to the following processing, and when the authentication fails, the process ends. The UID designating unit 217 of the registration terminal 200 generates a data issuing application including a data index, which is information for specifying a type of data, and a UID (S316), and transmits the data issuing application to the issuing terminal 100 (S317).

The user of the registration terminal 200 presents identity proof information to a user of the issuing terminal 100 (S318). The user of the issuing terminal 100 confirms the presented identity proof information (S319). To present and confirm the identity proof information, the user of the registration terminal 200 and the user of the issuing terminal 100 may directly present and visually confirm an identity proof document while facing each other, or the user of the registration terminal 200 may transmit the identity proof information to the issuing terminal 100 from the registration terminal 200, and the user of the issuing terminal 100 may confirm the identity proof information displayed on the output device 160 of the issuing terminal 100.

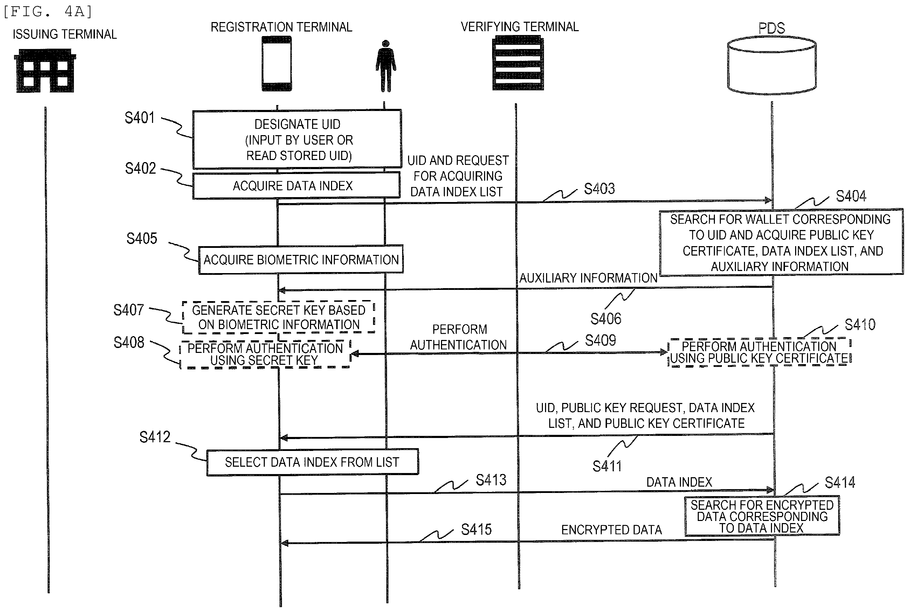

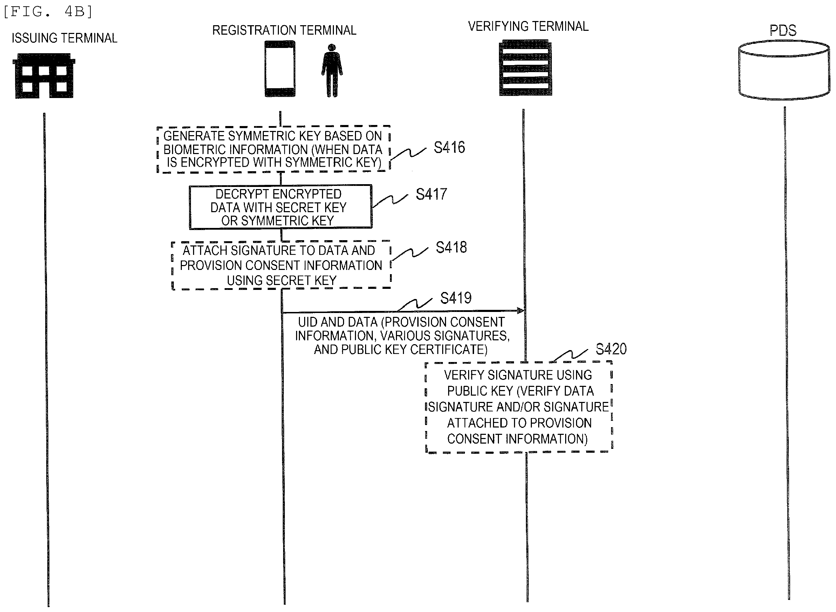

For example, the user of the issuing terminal 100 reads a my-number card using the issuing terminal 100 or another terminal owned by the user, and transmits the my-number card from the issuing terminal 100 to the registration terminal 200, thereby implementing identity proof of the user of the issuing terminal 100. In addition, for example, the registration terminal 200 transmits the public key certificate acquired from the PDS 400 to the issuing terminal 100, or transmits personal data (for example, data related to an attribute, a history, or the like of the user of the registration terminal 200) to the issuing terminal 100 using a method similar to that of the data presentation processing to be described later with reference to FIGS. 4A and 4B, thereby implementing the identity proof of the user of the issuing terminal 100.

The processing in steps S318 and S319 may not be performed. However, by performing these processing, it is possible to prevent spoofing of the user of the registration terminal 200. Further, after performing these processing, information on an identity proof method used in the processing is described in extended regions of the second public key certificate to be described later, so that the second public key certificate can increase a degree of reliability of another issuer or verifier.

The data issuing unit 113 searches for the personal data 122 and generates data by acquiring data, which corresponds to the data index indicated by the received data issuing application, and personal identification information on the user included in the public key certificate or the identity proof information (S320). The data is, for example, personal data related to an attribute, qualification information, a history, or the like of the user of the registration terminal 200. Examples of the above-described personal data include Covid-19 polymerase chain reaction (PCR) examination result information (negative certification information) on the user of the registration terminal 200, a degree certificate for certifying that the user has acquired a university degree when the issuer is a university, and past purchase history information on the user of the registration terminal 200 at an electric commerce (EC) site operated by the user of the issuing terminal 100.

The certificate generating unit 112 of the issuing terminal 100 generates one or more verifiable credentials using a secret key included in the key data 121 (S321). Wherein, the verifiable credential is data including user data including information on the user, and an electronic signature generated for the user data using the secret key included in the key data 121. The user data may be the above-described personal data related to the attribute, the qualification information, the history, or the like of the user, and in this case, a data format of the verifiable credential may be a verifiable credential (VC) format described in NPL 1. The user data may include a public key included in the public key certificate described above. The verifiable credential including such a public key can be used as the above-described second public key certificate. The second public key certificate may be in the X509 format, and may include information on the UID or the identity proof method. The certificate generating unit 112 may generate a plurality of verifiable credentials in step S321. When the verifiable credential is not included in the data generated in step S320 described above, the processing in step S321 may not be performed.

The data issuing unit 113 may include one or more verifiable credentials generated in step S320 in the data generated in step S321. The data issuing unit 113 may generate a plurality of types of data in step S321.

The encrypting unit 114 generates encrypted data by encrypting the data generated in step S320 (and also the verifiable credential when the verifiable credential is generated in step S321) separately (S322). Specifically, for example, the encrypting unit 114 acquires a public key from the first public key certificate, and generates the encrypted data by encrypting the data with the acquired public key using a public key encryption scheme. For example, the encrypting unit 114 randomly generates a symmetric key, encrypts data with the symmetric key using a symmetric key encryption scheme, encrypts the symmetric key with the public key using the public key encryption scheme, and sets data including the encrypted data and the encrypted symmetric key as the encrypted data.

The secret key and the public key may be stored in the key data 121 of the issuing terminal 100, and the encrypting unit 114 may attach a signature to the data generated in S321 using the secret key, then perform encrypted data generation processing in step S322, and distribute the public key to the verifying terminal 300. Accordingly, the verifying terminal 300 can verify, by the issuer, the signature attached to the data using the public key. In particular, when the signature generation is performed after the identity proof is performed in steps S318 and S319, it is possible to guarantee that the data is generated after the issuer performs the identity proofing at a security level of the issuer without using a certificate authority and a registration authority.

The data issuing unit 113 transmits the UID, the data index, and the encrypted data to the PDS 400 (S323). The processing in steps S322 and S323 may be omitted. However, by performing the processing in step S322, processing in steps S324 to S328 to be described later can be omitted, and time and effort required for the user of the issuing terminal 100 can be reduced in particular. On the contrary, steps S322 and S323 may be omitted, and in this case, the processing in steps S324 to S328 is performed.

The data issuing unit 113 transmits the data acquired in step S321 to the registration terminal 200 (S324). The biometric information acquiring unit 211 of the registration terminal 200 acquires the biometric information of the user of the registration terminal 200 via the biometric information acquiring device 207, and generates the secret key using the auxiliary data (S325). When the processing in steps S302 to S305 is performed, the processing in step S323 may be omitted.

The encrypting unit 215 generates a signature for the received data using the secret key (S326). The processing in step S324 may be omitted. However, by performing the processing in step S326, the user of the registration terminal 200 can leave an evidence for confirming that no error is present in contents of data by himself/herself. In the data presentation processing to be described later with reference to FIGS. 4A and 4B, the verifying terminal 300 verifies the signature, so that reliability of data can be secured.

The key generating unit 212 generates the symmetric key using the auxiliary data based on the biometric information, and the encrypting unit 215 generates encrypted data by encrypting the data using the symmetric key (S327). A method for generating the encrypted data in step S327 may be the same as the method for generating the encrypted data described in step S322. The encrypting unit 215 transmits the UID, the data index, and the encrypted data to the PDS 400 (S328).

The data management unit 411 of the PDS 400 stores the encrypted data (including an encrypted verifiable credential in some cases) and the data index in the wallet 421 corresponding to the UID (S329). The key generating unit 212 of the registration terminal 200 deletes the secret key and the symmetric key (S330).

FIGS. 4A and 4B are sequence diagrams illustrating an example of the data presentation processing. In FIGS. 4A and 4B, the processing performed by the registration terminal 200 is described, and processing to be described below may be performed by a terminal that is different from both the registration terminal 200 used in the data registration processing and the registration terminal 200 used in the data issuing processing. That is, all of the registration terminals 200 used in the data registration processing, the data issuing processing, and the data presentation processing may be the same terminal or may be partially or entirely different terminals.

The UID designating unit 217 of the registration terminal 200 designates the UID of the user of the registration terminal 200 (S401). The UID designating unit 217 may designate the UID of the user using a method similar to that in step S201, or may read the UID from the auxiliary storage unit 203 or the memory 202 when the UID is stored in the auxiliary storage unit 203 and/or the memory 202.

The index acquiring unit 216 acquires, for example, one or more data indexes indicating types of data to be presented according to the input of the user (S402). For example, when a data index is designated from the verifying terminal 300 (for example, a data index of data to be presented to a user of the verifying terminal 300 is determined in advance) or the like, the processing in step S402 may be omitted. Alternatively, the registration terminal 200 may be notified of the designated data index, and the index acquiring unit 216 may be able to select only (a part or all of) the data index included in the designated index.

The index acquiring unit 216 transmits, to the PDS 400, the designated UID and a request for acquiring a data index list (S403). The search unit 413 of the PDS 400 searches for the wallet 421 corresponding to the UID, and acquires the public key certificate, the data index list, and the auxiliary data that are stored in the wallet 421 (S404).

The biometric information acquiring unit 211 of the registration terminal 200 acquires biometric information via the biometric information acquiring device 207 (S405). The search unit 413 of the PDS 400 sends the auxiliary data acquired in step S404 back to the registration terminal 200 (S406). The key generating unit 212 generates a secret key using the biometric information acquired in step S405 and the auxiliary data acquired in step S406 (S407) . Authentication is performed between the registration terminal 200 and the PDS 400 (S409). Specifically, for example, the authentication unit 214 of the registration terminal 200 performs authentication using the secret key generated in step S407 (S408), and the authentication unit 412 of the PDS 400 performs authentication using the public key certificate included in the above search result (S410).

By performing the authentication in steps S407 to S410, it is safer against a false UID or a designation error by the registration terminal 200. Another authentication method (password authentication, FIDO authentication, or the like) may be used in steps S407 to S410. The processing in steps S407 to S410 may be omitted. However, when the encrypted data is created using the public key encryption scheme, since the secret key is used in data decryption processing to be described later, the processing in step S407 needs to be performed.

When the authentication in steps S407 to S410 is successfully performed, processing subsequent to step S411 is performed, and when the authentication in steps S407 to S410 fails, the process ends without performing the processing subsequent to step S409. The search unit 413 of the PDS 400 transmits, to the registration terminal 200, the data index list and the public key certificate that are acquired in step S404 (S411).

The index acquiring unit 216 of the registration terminal 200 selects one or more data indexes from the received index list, for example, according to the input of the user (S412). The index acquiring unit 216 transmits the selected data index to the PDS 400 (S413). The search unit 413 of the PDS 400 searches for and acquires encrypted data, which corresponds to the data index received from the wallet 421 corresponding to the UID (S414). The search unit 413 transmits the acquired encrypted data to the registration terminal 200 (S415).

The key generating unit 212 generates a symmetric key using the biometric information acquired in step S405 (S416). However, when the data is not encrypted with the symmetric key in step S322, processing in step S417 may be omitted. The encrypting unit 215 decrypts the encrypted data with the secret key or the symmetric key according to an algorithm obtained by encrypting the encrypted data (S417).

The encrypting unit 215 attaches an electronic signature to the decrypted data and provision consent information on the data using the secret key (S418). For example, the provision consent information is held in advance by the verifying terminal 300, and is transmitted to the registration terminal 200 by the verifying terminal 300. The provision consent information includes, for example, a hash value of the data, information on a user, information on a verifier, a generation date and time of the data, and a use purpose of the data (for example, determined according to input of a user of the issuing terminal 100). By attaching the electronic signature in step S419, the user of the verifying terminal 300 can prove to a third party that the data is not illegally obtained or that the data is not to be used for other purposes. The encrypting unit 215 transmits, to the verifying terminal 300, the designated UID and data, and further transmits, once generated, the provision consent information, various signatures, the verifiable credential, and the public key certificate acquired in step S411 (S419).

The signature verifying unit 311 of the verifying terminal 300 verifies the signature generated in step S418 using the public key included in the public key certificate received in step S419 (S420). Specifically, for example, the signature verifying unit 311 verifies the electronic signature attached to the data and the electronic signature attached to the provision consent information that are generated in step S418 using the public key included in the public key certificate received in step S419 (S420). For example, the signature verifying unit 311 displays a verification result on the output device 306 of the verifying terminal 300 and/or the output device 206 of the registration terminal 200.

As described above, the data management system according to the present embodiment generates the symmetric key based on the biometric information as described above, and further stores the data in the PDS 400 in a manner that the data cannot be decrypted unless the symmetric key is used. Therefore, even a user who does not own a mobile terminal (a smartphone, a tablet terminal, or the like) for performing data or key management can perform the registration processing and the data presentation processing. Accordingly, a risk of loss and theft of the mobile terminal is eliminated, and even a user who does not own a mobile terminal can use a self-sovereign identity mechanism.

In addition, since the registration terminal 200 performs authentication or verifies signature using the public key generated based on the biometric information of the user of the registration terminal 200, it is possible to prevent unauthorized behavior in which the user colludes with others to transfer or sell data, or a mobile terminal when the registration terminal 200 is the mobile terminal.

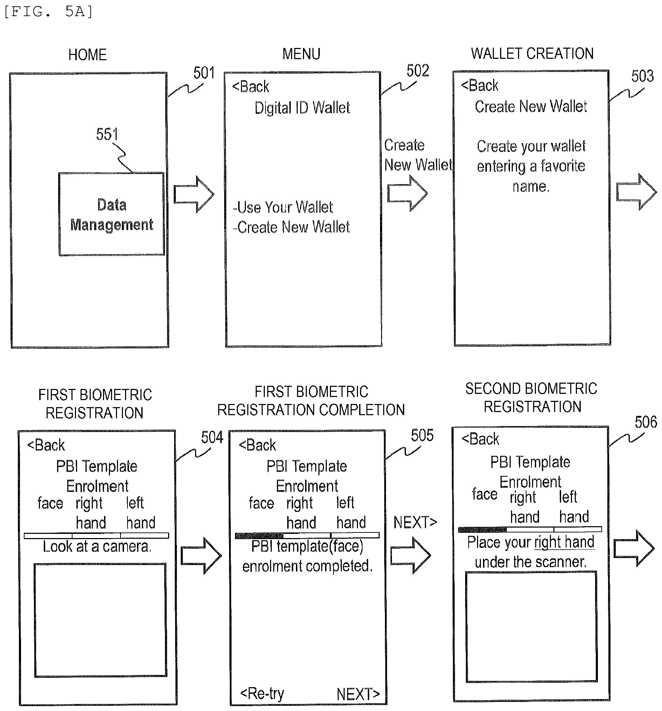

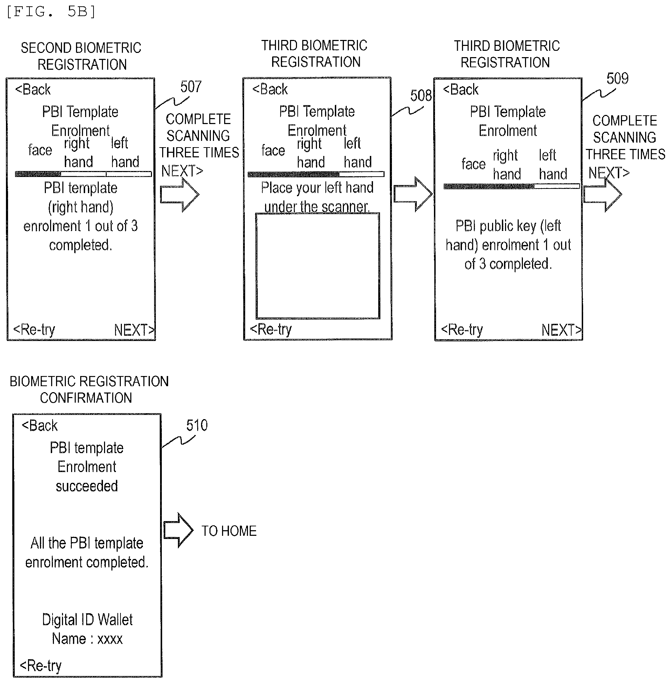

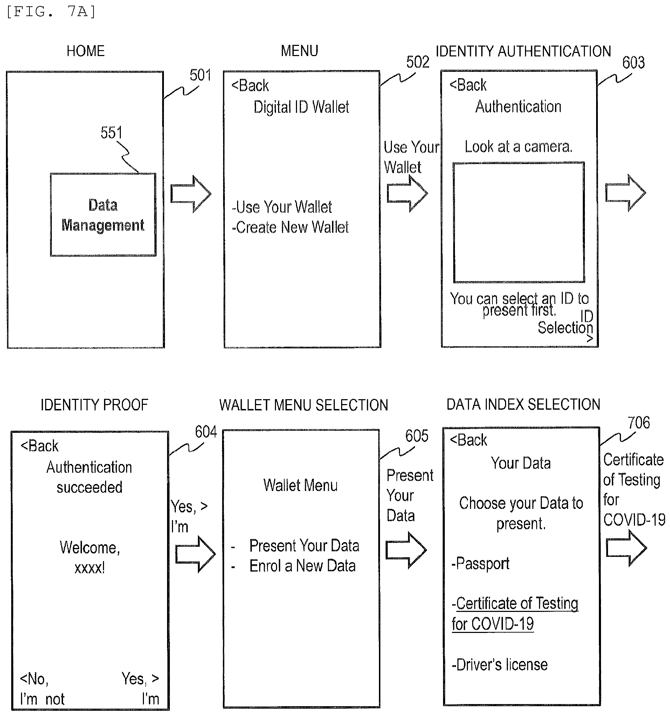

FIGS. 5A and 5B are diagrams illustrating an example of screen transition of the output device 206 of the registration terminal 200 in the registration processing. In the example of screen transition to be described below, a UID is automatically designated by the registration terminal 200. In examples of screen transition in FIGS. 5A to 7B, a scene is described in which the registration terminal 200 acquires a negative certificate of Covid-19 from the issuing terminal 100, registers the negative certificate in the PDS 400, and presents the negative certificate to the verifying terminal 300. In FIGS. 5A to 7B, when "Back" is selected, a screen returns to a previous screen.

First, a home screen 501 is displayed. An icon 551 for activating a data management application is displayed on the home screen 501. When the icon 551 is selected, the screen transitions to a menu screen 502. When "-Create New Wallet" is selected on the menu screen 502, data issuing processing is started, and the screen transitions to a wallet creation screen 503.

On the wallet creation screen 503, it is required to input a wallet name. When the wallet name is input on the wallet creation screen 503, the screen transitions to a first biometric registration screen 504. In the example of FIGS. 5A and 5B, a face image, a right finger vein image, and a left finger vein image are acquired as biometric information. On the first biometric registration screen 504, it is required to input a face image by a camera serving as an example of the biometric information acquiring device 207.

When the camera completes capturing the face image on the first biometric registration screen 504, the screen transitions to a first biometric registration completion screen 505. The first biometric registration completion screen 505 displays information indicating that registration of the face image is completed. When "NEXT" is selected on the first biometric registration completion screen 505, the screen transitions to a second biometric registration screen 506. On the second biometric registration screen 506, it is required to input a right palm vein image by a scanner serving as an example of the biometric information acquiring device 207.

When the scanner completes scanning of the right finger vein image once on the second biometric registration screen 506, the screen transitions to a second biometric registration screen 507. In the example of FIGS. 5A and 5B, registration is completed by scanning the right finger vein and the left finger vein three times, respectively. After the second biometric registration screen 507 is displayed, when the scanner further completes the scanning of the right finger vein image twice, the screen transitions to a third biometric registration screen 508.

When the scanner completes scanning of the left finger vein image once on the third biometric registration screen 508, the screen transitions to a third biometric registration screen 509. After the third biometric registration screen 509 is displayed, when the scanner further completes the scanning of the left finger vein image twice, acquisition of the biometric information in step S202 is completed, the processing in steps S202 to S209 is performed, and the screen transitions to a biometric registration confirmation screen 510. The biometric registration confirmation screen 510 displays information indicating that the biometric information is acquired and the registration processing ends, and the wallet name. The biometric registration confirmation screen 510 returns to the home screen 501.

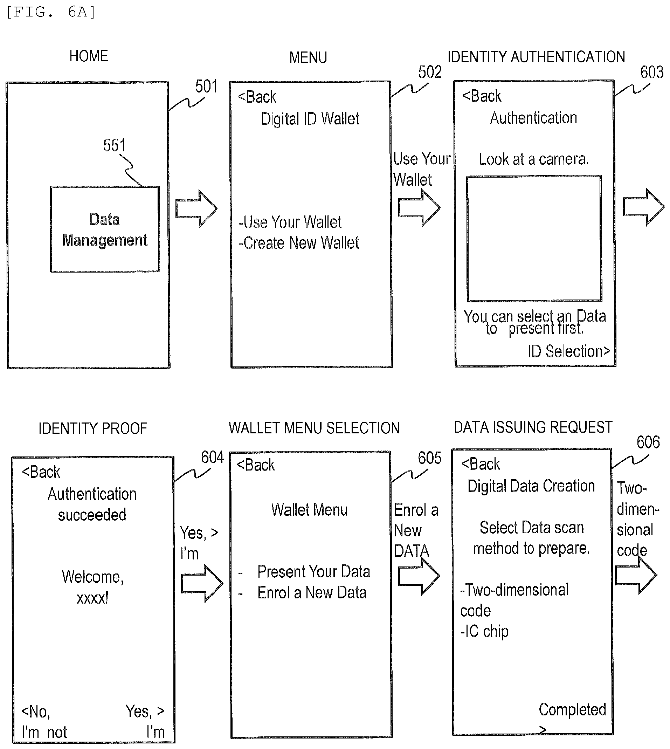

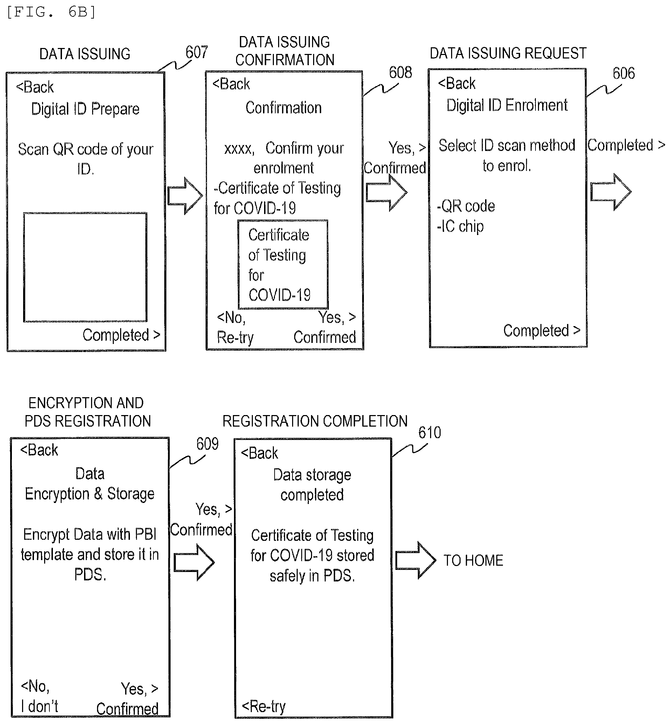

FIGS. 6A and 6B are diagrams illustrating an example of screen transition of the output device 206 of the registration terminal 200 in the data issuing processing. First, the home screen 501 transitions to the menu screen 502. When "-Create New Wallet" is selected on the menu screen 502, the screen transitions to an identity authentication screen 603. On the identity authentication screen 603, the processing in step S302 is performed. That is, on the identity authentication screen 603, it is required to input a face image via the camera serving as the example of the biometric information acquiring device 207 (that is, information indicating a modality of biometric information to be input is displayed).

When the input of the face image is completed on the identity authentication screen 603, the processing in steps S303 to S312 is performed, that is, the authentication between the registration terminal 200 and the PDS 400 and the authentication between the registration terminal 200 and the issuing terminal 100 are performed, and the screen transitions to an identity proof screen 604. The identity proof screen 604 displays information indicating that the authentication is successfully performed, and the wallet name. When "Yes, I'm" is selected on the identity proof screen 604, the screen transitions to a wallet menu selection screen 605.

When "Enrol a New Data" is selected on the wallet menu selection screen 605, the processing in step S314 is started, and the screen transitions to a data issuing request screen 606. The data issuing request screen 606 displays methods (wherein "Two-dimensional code" or "IC chip") for generating a data issuing application to be transmitted to the issuing terminal 100. When "complete" is selected on the wallet menu selection screen 605, the screen transitions to an encryption and PDS registration screen 609 to be described later (however, when the registration terminal 200 does not hold data, for example, the screen returns to the menu screen 502).

When "Two-dimensional code" is selected on the data issuing request screen 606, the screen transitions to a data issuing screen 607, and a request for scanning a two-dimensional code is displayed on the data issuing screen 607. When "IC Chip" is selected on the data issuing request screen 606, a request for reading an IC chip is displayed on the data issuing screen 607. When the two-dimensional code is read by the camera or the like while the data issuing screen 607 is displayed, the processing in step S314 ends, at least the processing in steps S319 and S312 is performed, and the screen transitions to a data issuing confirmation screen 608.

The data issuing confirmation screen 608 displays the issued data. When "Yes, I Confirmed" is selected on the data issuing confirmation screen 608, the screen returns to the data issuing request screen 606. When "No, > Retry" is selected on the data issuing confirmation screen 608, for example, the data is discarded and then the screen returns to the data issuing request screen 606.

When "complete" is selected on the data issuing request screen 606, the screen transitions to the encryption and PDS registration screen 609. The encryption and PDS registration screen 609 performs display for determining whether the issued data is encrypted and transmitted to the PDS 400. When "Yes, I Confirmed" is selected on the encryption and PDS registration screen 609, the processing in steps S325 to S328 is performed, and the screen transitions to a registration completion screen 610. When "No, I don't" is selected on the encryption and PDS registration screen 609, for example, the screen returns to the menu screen 502.

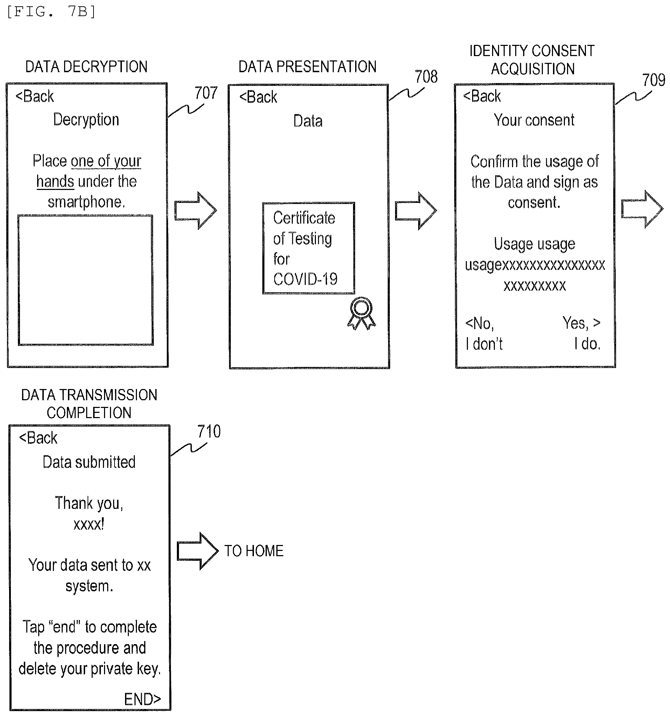

FIGS. 7A and 7B are diagrams illustrating an example of screen transition of the output device 106 of the registration terminal 200 in the data presentation processing. Since transition to the home screen 501, the menu screen 502, the identity authentication screen 603, the identity proof screen 604, and the wallet menu selection screen 605 is the same as that in FIG. 6A, description thereof is omitted.

When "Present Your Data" is selected on the wallet menu selection screen 605, at least the processing in step S412 is performed, and the screen transitions to a data index selection screen 706. On the data index selection screen 706, a data index list is displayed, and it is selectable to acquire data corresponding to which data index. Wherein, "Certificate of Testing for Covid-19" is selected as the data index on the data index selection screen 706 (that is, in step S413), the processing in steps S414 to S416 is performed, and the screen transitions to a data decryption screen 707.

On the data decryption screen 707, biometric information necessary for generating a key for data decryption is required (that is, information indicating a modality of biometric information as required is displayed) . Wherein, the data is decrypted by a key generated based on one finger vein. When the biometric information is acquired via the biometric information acquiring device 207 in a state in which the data decryption screen 707 is displayed, the processing in step S418 is performed, and the screen transitions to a data presentation screen 708.

The data presentation screen 708 presents the decrypted data and the decrypted verifiable credential. For example, when a predetermined time elapses after the data presentation screen 708 is displayed, the screen transitions to an identity consent acquisition screen 709. The identity consent acquisition screen 709 displays use purpose information included in the decrypted data. When "Yes, I do" is selected on the identity consent acquisition screen 709, the processing in steps S420 and S421 is performed, and the screen transitions to a data transmission completion screen 710.

When "No, I don't" is selected on the identity consent acquisition screen 709, for example, the screen returns to the menu screen 502. The data transmission completion screen 710 displays information indicating that the data is transmitted to the verifying terminal 300. When "END" is selected on the data transmission completion screen 710, the screen returns to the home screen 501.

The invention is not limited to the embodiment described above, and includes various modifications. For example, the embodiment described above has been described in detail to facilitate understanding of the invention, and the invention is not necessarily limited to those including all the configurations described above. A part of a configuration according to one embodiment can also be replaced with a configuration according to another embodiment, and a configuration according to one embodiment can also be added to a configuration according to another embodiment. A part of a configuration according to each embodiment may be added, deleted, or replaced with another configuration.

Some or all of the above configurations, functions, processing units, processing methods, and the like may be implemented by hardware by, for example, designing with an integrated circuit. In addition, each of the above configurations, functions, and the like may be implemented by software by a processor interpreting and executing a program for implementing each function. Information on such as a program, a table, and a file for implementing each of the functions can be stored in a recording device such as a memory, a hard disk, or a solid state drive (SSD), or in a recording medium such as an IC card, an SD card, a DVD.

Control lines and information lines considered to be necessary for description are illustrated, and not all control lines and information lines are necessarily illustrated in a product. Actually, it may be considered that almost all the configurations are connected to each other.

## Claims

1. A data management system comprising:
a first computer;
a second computer; and
a third computer, wherein
the first computer generates a secret key based on biometric information on a user of the first computer,
the second computer holds a public key corresponding to the secret key, encrypted data as data encrypted based on the public key, a list of indexes indicating a type of the data, and an index of the encrypted data, and transmits the list to the first computer,
the first computer designates an index of data to be presented, which is an index included in the list, and transmits the designated index to the second computer,
the second computer transmits, to the first computer, the encrypted data corresponding to the index transmitted by the first computer, and
the first computer decrypts the encrypted data corresponding to the index based on the secret key and transmits the decrypted data to the third computer.

2. The data management system according to claim 1, wherein
the second computer holds the public key,
the first computer uses the secret key and the second computer uses the public key, thereby performing authentication between the first computer and the second computer, and
when the authentication is successfully performed, the second computer transmits the list to the first computer.

3. The data management system according to claim 1, wherein
the third computer holds the public key,
the first computer holds provision consent information on the data, attaches an electronic signature to the provision consent information using the secret key, and transmits, to the third computer, the provision consent information to which the electronic signature is attached, and
the third computer verifies the electronic signature using the public key.

4. The data management system according to claim 1, further comprising:
a fourth computer, wherein
the first computer generates a symmetric key based on the biometric information,
the fourth computer holds original data before encryption of the encrypted data, and transmits the original data to the first computer, and
the encrypted data held by the second computer is data obtained by the first computer encrypting the original data based on the symmetric key and transmitting the encrypted original data to the second computer.

5. The data management system according to claim 4, wherein
the first computer includes a biometric information acquiring device and is connected to a display device,
the encrypted data held by the second computer includes an encrypted verifiable credential obtained by the fourth computer encrypting a verifiable credential based on the public key, and
the first computer displays information indicating a modality of the biometric information on the display device, acquires biometric information via the biometric information acquiring device, generates the secret key based on the acquired biometric information, decrypts the encrypted verifiable credential included in the encrypted data corresponding to the index based on the secret key, transmits the decrypted verifiable credential to the third computer, and displays the decrypted data and the decrypted verifiable credential on the display device.

6. The data management system according to claim 1, further comprising:
a fourth computer, wherein
the fourth computer holds original data before encryption of the encrypted data, and the public key, and
the encrypted data held by the second computer is data obtained by the fourth computer encrypting the original data based on the public key and transmitting the encrypted original data to the second computer.

7. The data management system according to claim 6, wherein
the first computer includes a biometric information acquiring device and is connected to a display device,
the encrypted data held by the second computer includes an encrypted verifiable credential obtained by the fourth computer encrypting a verifiable credential based on the public key, and
the first computer displays information indicating a modality of the biometric information on the display device, acquires biometric information via the biometric information acquiring device, generates the secret key based on the acquired biometric information, decrypts the encrypted verifiable credential included in the encrypted data corresponding to the index based on the secret key, transmits the decrypted verifiable credential to the third computer, and displays the decrypted data and the decrypted verifiable credential on the display device.

8. The data management system according to claim 6, wherein
the second computer holds a public key certificate including the public key, and transmits the public key certificate to the first computer,
the public key held by the fourth computer is a public key included in the public key certificate transmitted to the fourth computer by the first computer, and
the first computer uses the secret key, and the fourth computer uses the public key certificate, thereby performing authentication between the first computer and the fourth computer.

9. The data management system according to claim 8, wherein
the first computer uses the secret key, and the second computer uses the public key certificate, thereby performing authentication between the first computer and the second computer, and
when the authentication is successfully performed, the second computer transmits the public key certificate to the first computer.

10. A data management method performed by a data management system including a first computer, a second computer, and a third computer, the data management method comprising:
the first computer generating a secret key based on biometric information on a user of the first computer;
the second computer holding a public key corresponding to the secret key, encrypted data as data encrypted based on the public key, a list of indexes indicating a type of the data, and an index of the encrypted data, and transmitting the list to the first computer;
the first computer designating an index of data to be presented, which is an index included in the list, and transmitting the designated index to the second computer;
the second computer transmitting, to the first computer, the encrypted data corresponding to the index transmitted by the first computer; and
the first computer decrypting the encrypted data corresponding to the index based on the secret key and transmitting the decrypted data to the third computer.

11. A computer-readable non-transitory recording medium for storing a data management program configured to cause a data management system including a first computer, a second computer, and a third computer to perform data management, wherein
the data management program causes the first computer to perform processing of generating a secret key based on biometric information of a user of the first computer,
the second computer holds a public key corresponding to the secret key, encrypted data as data encrypted based on the public key, a list of indexes indicating a type of the data, and an index of the encrypted data, and
the data management program causes following processing to be executed:
processing by the second computer of transmitting the list to the first computer;
processing by the first computer of designating an index of data to be presented, which is an index included in the list, and transmitting the designated index to the second computer;
processing by the second computer of transmitting, to the first computer, the encrypted data corresponding to the index transmitted by the first computer; and
processing by the first computer of decrypting the encrypted data corresponding to the index based on the secret key and transmitting the decrypted data to the third computer.
